# EUROPÄISCHE PATENTSCHRIFT

(11) **EP 2 438 382 B1**
(45) Veröffentlichungstag und Bekanntmachung des Hinweises auf die Patenterteilung: **08.07.2015**
(21) Anmeldenummer: 10720437.2
(22) Anmeldetag: 31.05.2010
(51) Int. Cl.: F28D 21/00, F24H 1/32, F24H 8/00, F24H 9/00, F28D 9/00

(54) **GLIEDERHEIZKESSEL**
SECTIONAL BOILER
CHAUDIÈRE SECTIONNÉE

(30) Priorität: 05.06.2009 DE 102009024070
(43) Veröffentlichungstag der Anmeldung: 11.04.2012
(73) Patentinhaber: Robert Bosch GmbH, 70442 Stuttgart (DE)
(72) Erfinder: RAUSCH, Rainer, 36304 Alsfeld (DE); JUNG, Gerhard, 35112 Fronhausen (DE); HENRICH, Holger, 35633 Lahnau (DE)
(86) Internationale Anmeldenummer: PCT/EP2010/057545
(87) Internationale Veröffentlichungsnummer: WO 2010/139662

(56) Entgegenhaltungen:
- EP-A2- 1 179 721
- EP-A2- 1 647 793
- FR-A1- 2 846 075

## Beschreibung

Die Erfindung betrifft einen Gliederheizkessel, insbesondere einen Brennwertkessel aus Gusseisen- oder Aluminium-Werkstoffen, nach dem Oberbegriff des Patentanspruches 1.

Derartige Gliederheizkessel bestehen aus mehreren einstückig gegossenen Kesselgliedem, welche hintereinander angeordnet und wasserseitig durch Naben miteinander verbunden sind. Dabei werden die von den Kesselgliedern gebildeten Wasserkanäle und -taschen zwischen dem Rücklaufanschluss und dem Vorlaufanschluss durchströmt. In der Regel besitzen gattungsgemäße Gliederheizkessel einen unteren Rücklaufanschluss und einen oben angeordneten Vorlaufanschluss, vorzugsweise in der jeweiligen Nabe. Die Heizgase strömen vom Brennraum über nachgeschaltete Heizgaszüge zu einem Abgasstutzen und geben auf Ihrem Weg Wärme an das Kesselwasser ab.

Bei allen bisherigen Kesseln dieser Art sind die Glieder in Reihe hintereinander angeordnet. Es gibt ein ringförmiges Vorderglied, an dem eine Brennraumtür oder eine Brennerplatte befestigt werden kann, je nach Leistungsgröße ein oder mehrere ähnlich gestaltete Mittelglieder sowie ein Hinterglied. Dabei erstreckt sich der Brennraum durch Vorder- und Mittelglieder bis zum Hinterglied, welches mit seiner deckelförmigen Gestaltung den Boden des Brennraumes bildet. Alle Kesselglieder besitzen bei diesen Ausführungsformen ähnliche äußere Abmessungen, weil sie über den gesamten Kesselquerschnitt Teile von Brennraum, Heizgaszügen und Wasserraum bilden. Weiterhin sind auch Kessel für niedrige Leistungsbereiche bekannt, die aus nur zwei oder gar nur einem Kesselglied bestehen.

Hinsichtlich der Abgasführung und des Wirkungsgrades der Heizgeräte unterscheidet man zwischen Heizwerttechnik und Brennwerttechnik. Aus Gründen der Energieeinsparung kommen immer mehr Brennwertheizgeräte zur Anwendung. Der Aufbau ihres Wärmetauschers gewährt die Möglichkeit, die im Betrieb bei der Verbrennung von Brennstoff und Luft entstehenden feuchten Abgase unter den Abgastaupunkt abzukühlen. Dabei kondensiert die Feuchtigkeit der Abgase aus und es wird zusätzlich zur fühlbaren Wärme die Kondensationswärme auf das Heizwasser übertragen.

Bei einer Verwendung als Brennwertkessel muss besonders Wert auf die Werkstoffauswahl gelegt werden, denn auf Grund der Zusammensetzung des verwendeten Brennstoffs und der Verbrennungsführung sind die Abgase schadstoffbelastet und das anfallende Kondenswasser weist verschiedene Säuren in geringer Konzentration auf. Die von Kondenswasser berührten Bauteile wie Heizflächen, Abgassammler und Abgasleitung müssen also gegenüber den Säuren resistent sein, weshalb es üblich ist, diese Bauteile aus Edelstahl, Aluminium oder Kunststoff zu fertigen. Speziell in der Ölbrennwerttechnik kommen im Allgemeinen geschweißte Edelstahlwärmetauscher zur Anwendung, wie beispielsweise auch in der DE 10 2004 023 711 B3 als Spiralrohrwicklung offenbart. Sie bieten den Vorteil, die Säurebelastung ohne Korrosion zu ertragen. Nachteilig sind die mit dem Werkstoff verbundenen hohen Kosten sowie besonders bei Schweißkonstruktionen aus Blechen die ungünstigeren Skalierbedingungen und die größeren, in räumlich engen Verhältnissen schwer montierbaren Baugrößen.

Die Wärmetauscher konventioneller Heizwertgeräte werden häufig aus Gusseisen hergestellt. Sie zeichnen sich durch hohe Robustheit und lange Lebensdauer aus. Ihr Aufbau aus zumeist identischen Gusssegmenten erlaubt eine kostengünstige Fertigung und leichte Skalierbarkeit hinsichtlich unterschiedlicher Leistungsgrößen und bietet gute Montagemöglichkeiten selbst unter engen Aufstellbedingungen. Der Werkstoff erträgt die kurzen Abgaskondensationsphasen bei Betriebsstart und kaltem Wärmetauscher sehr gut. Lediglich für den Brennwertbetrieb mit länger anhaltendem Kondenswasseranfall ist Gusseisen in seiner heutigen Form und Gestaltung nicht geeignet.

Weiterhin ist aus der DE 296 21 817 U1 ein Brennwertheizkessel mit integriertem und hydraulisch nachgeschaltetem Kompaktwärmetauscher aus korrosionsbeständigem Werkstoff bekannt. Dieser Kompaktwärmetauscher ist als separates Bauteil von zwei schalenförmigen Kesselgliedern umschlossen und wasserseitig gesondert angeschlossen. Alle Kessel mit nachgeschaltetem Wärmetauscher haben die Nachteile, dass der Montageaufwand durch die erforderlichen Rohrteile erhöht wird und der wasserseitige Widerstand ansteigt. Die Anordnung als separates, außen liegendes Bauteil bewirkt ebenfalls Abkühlverluste, die durch eine geeignete Wärmedämmung vermindert werden müssen.

Die Schrift EP 1 647 793 A2 zeigt eine Erfindung auf, die aus einem modularen Aufbau aus Platten, welche in konstanten Abständen abwechselnd aus Nippel- und Kupplungsplatte aufgebaut ist. Durch diese Formgebung werden Kammem für den Wärmetausch ausgebildet. Diese Kammern werden mit Wasser vom Boilerkreislauf benetzt und außerhalb der Kammern durchquert der Abgasstrom einer Gasheizung die Wandungen und überträgt Wärme auf das Wasser. Durch diese zusätzliche universelle Armatur im Abgasstrom erhöhen sich die Investitionskosten im Haushalt für Gasbrenner und die Kondensation der Abgase bei früheren verwendeten Kesselmaterialien und Kaminrohre ist nachteilig, da diese nicht korrosionsfest gegenüber dem anfallenden sauren Kondensat sind.

Dieses Dokument offenbart den Oberbegriff des Anspruchs 1.

Aus der DE 44 25 302 C2 ist das Anordnen von Vor- und Rücklaufanschluss in einer gemeinsamen im oberen Kesselnabe bekannt. Es wird dabei eine Mischzone im oberen Bereich eines gemeinsamen Wasserraumes ausgebildet, so dass das eintretende kalte Rücklaufwasser mit aufsteigendem heißen Vorlaufwasser vorgewärmt wird. Dadurch wird Kondensation im Bereich der Heizflächen vermieden.

Der Erfindung liegt die Aufgabe zugrunde, einen Gliederheizkessel aus Gusseisen oder Aluminium insbesondere im Hinblick auf Kompaktheit und Robustheit zu optimieren.

Erfindungsgemäß wird dies mit den Merkmalen des Patentanspruches 1 gelöst. Vorteilhafte Weiterbildungen sind den Unteransprüchen zu entnehmen.

Der Wärmetauscher weist als Heizgaszüge jeweils ringförmige Spalte zwischen zwei benachbarten Gliedern mit einer einander zugeordneten Geometrie auf. Diese verlaufen jeweils ausgehend vom Brennraum etwa radial nach außen und münden in einen Abgassammelraum auf der Außenseite der Glieder ein.

Dazu sind verschiedene Ausführungsformen möglich, nämlich dass erstens ein ringförmiger Spalt im rechten Winkel zur Mittelachse des Brennraumes radial und gerade nach außen verläuft. Bei einer zweiten Variante ist ein ringförmiger Spalt radial gekrümmt und verläuft bogenförmig, ähnlich einer Turbinenschaufel-Geometrie, nach außen. In einer dritten Ausführungsform ist vorgesehen, dass ein ringförmiger Spalt mit Schrägstellung zur Mittelachse des Brennraumes gerade nach außen verläuft. Dies bietet sich bei eine stehenden Anordnung des gesamten Gliederblockes besonders an, weil dann Kondensat ringsum aus einem Spalt gut nach unten ablaufen kann. Weiterhin kann ein ringförmiger Spalt in radialer Richtung auch wellenförmig nach außen verlaufen, insbesondere um innerhalb eines Spaltes die Strömungsturbulenz zu erhöhen, damit an den Oberflächen ein intensiver Wärmeübergang erreicht wird.

Vorteilhafterweise nehmen die Breite und/oder der freie Querschnitt eines ringförmigen Spaltes vom Brennraum bis zur Ausmündung auf der Außenseite der Glieder hin ab, um eine Anpassung an das sich mit der Abkühlung verringernde Heizgasvolumen zu erreichen. Die Heizgas berührten Oberflächen der Glieder, mindestens die den Spalt ausbildenden Oberflächen, können mit einer Korrosionsschutzbeschichtung versehen sein.

Der Abgassammelraum auf der Außenseite der Glieder, in welchen die ringförmigen Spalte einmünden, erstreckt sich als Hohlzylinder um die äußeren Mantelflächen der Glieder und wird von einem Mantel nach außen hin begrenzt. Dieser wird zwischen radial nach außen hervorspringenden ringförmigen Stegen auf den Außenseite von Vorder- und Hinterglied dichtend aufgenommen.

Die einzelnen Glieder sind jeweils heizwasserseitig in mindestens zwei Strömungskanäle aufgeteilt. Lauf des Erfindung weist jedes Glied heizwasserseitig mindestens eine Trennwand auf und ist dadurch in mindestens einen inneren, brennkammemahen Strömungskanal und mindestens einen äußeren, durchmessergrößeren Strömungskanal aufgeteilt. Die mindestens zwei Strömungskanäle in einem Glied sind im Bereich der unteren Nabe mit einer Überströmöffnung in der Trennwand hydraulisch miteinander verbunden, so dass diese in Reihe durchströmt werden. Ausgehend vom oberen Rücklaufanschluss gelangt das Rücklaufwasser zunächst in beiden Hälften eines Gliedes im jeweils äußeren, durchmessergrößeren Strömungskanal nach unten, strömt an der Überströmöffnung nach innen und gelangt dann in beiden Hälften eines Gliedes jeweils im inneren, brennkammemahen Strömungskanal wieder nach oben zum Vorlaufanschluss.

In einer ersten bevorzugten Ausführungsform weist der innere, brennkammemahe Strömungskanal einen geringeren Querschnitt als der äußere, brennkammerferne Strömungskanal auf. In einer weiteren bevorzugten Ausführungsform ist der innere, brennkammemahe Strömungskanal so bemessen, dass sich höhere Strömungsgeschwindigkeiten als im äußeren, brennkammerfemen Strömungskanal einstellen.

Vorteilhafterweise ist der Rücklaufanschluss im Bereich der oberen Nabe oberhalb des Vorlaufanschlusses angeordnet und es ist ein Einspeiserohr für Rücklaufwasser vorgesehen. Dieses besitzt jeweils auf Gliedebene mindestens eine Durchbrechung zur Einspeisung von Rücklaufwasser in den äußeren, brennkammerfemen Strömungskanal eines jeden Gliedes.

Zum Zusammenhalten des Gliederblockes dient vorzugsweise ein innerhalb der Naben angeordnetes Einspeiserohr für Rücklaufwasser, ein Entnahmerohr für Vorlaufwasser und/oder eine herkömmliche Ankerstange. Kommen die Wasser führenden Rohre zur Anwendung, so sind diese mit entsprechenden Gewinden zum Verspannen der Anordnung versehen.

Der Vorlaufanschluss befindet sich im Bereich der oberen Nabe unterhalb des Rücklaufanschlusses, wobei zwischen den einzelnen Gliedern zueinander in Längsrichtung fluchtende Durchbrechungen vorgesehen sind, welche als Verbindung zwischen den jeweiligen inneren, brennkammemahen Strömungskanälen dienen.

Im Bereich der unteren Nabe sind die einzelnen Glieder zueinander abgedichtet, wobei Verschluss- und/oder Dichtmittel an einer innerhalb der Nabe angeordneten Ankerstange angebracht sind, oder auf bekannte Art und Weise, zum Beispiel in Form von Dichtscheiben, in die Verbindungsstellen eingelegt sind.

Mit der Erfindung wird ein Gliederheizkessel mit bester Eignung für Brennwertbetrieb geschaffen, bei dem die positiven Werkstoffeigenschaften von Gusseisen oder Aluminium gezielt angewendet und genutzt werden, um gute Wärmeübertragungseigenschaften, Kompaktheit und Robustheit zu gewährleisten. Es werden Korrosion auslösende Betriebszustände und Belastungen durch die erfindungsgemäße Wasserführung minimiert. Durch die Aufteilung der Strömungskanäle ist die Temperaturverteilung im Wärmetauscher optimiert und die Effektivität gegenüber bekannten Prinzipien gesteigert.

Auch eine Korrosionsschutzbeschichtung ist erfindungsgemäß nicht nur einfach aufzubringen und zu kontrollieren, sondern sie wird auch in den Spalten vor möglichen mechanischen Belastungen geschützt. Die Gliederbauweise bietet neben der einfachen Herstellung auch den Vorteil, durch das Einfügen weiterer Mittelglieder unterschiedliche Längen für verschiedene Feuerungs- und Wärmetauscherleistungen variabel abzudecken. Alle wasserseitigen Anschlüsse befinden sich beispielsweise gut zugänglich auf einer Seite im oberen Bereich. Trotzdem bleiben dann alle stirnseitig angeordneten Anbauteile sowie die wasserseitigen Verbindungen gleich. Nur der umgebende Mantel um den Abgassammelraum variiert. Wegen der niedrigen Abgastemperaturen kann dieser sogar aus Kunststoff hergestellt werden.

Die Zeichnung stellt ein Ausführungsbeispiel der Erfindung dar. Es zeigt einen Gliederheizkessel aus Gusseisen oder Aluminium:

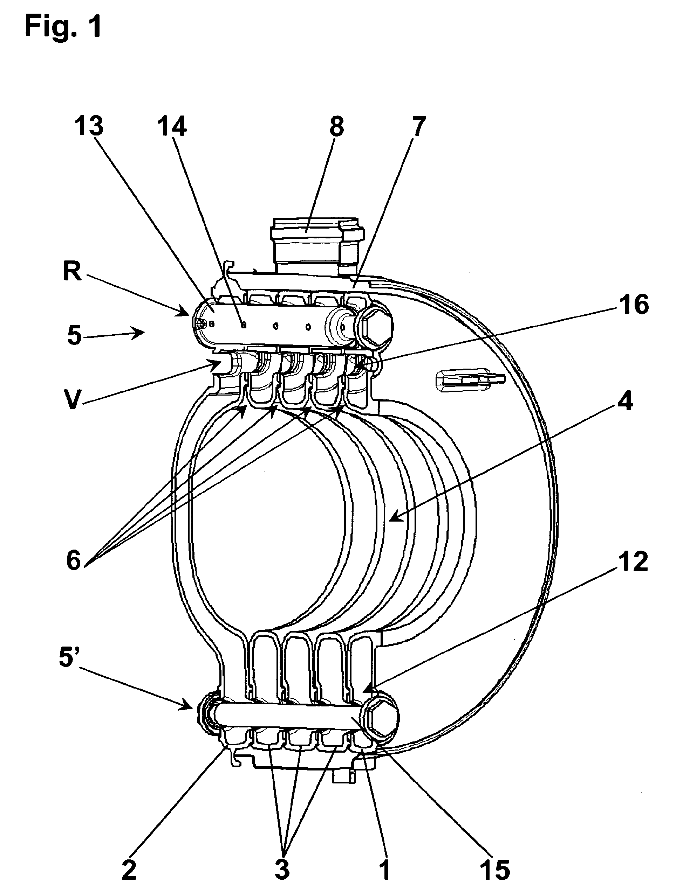

Fig. 1: in einer perspektivischen Gesamtansicht mit einem vertikalen Schnitt und

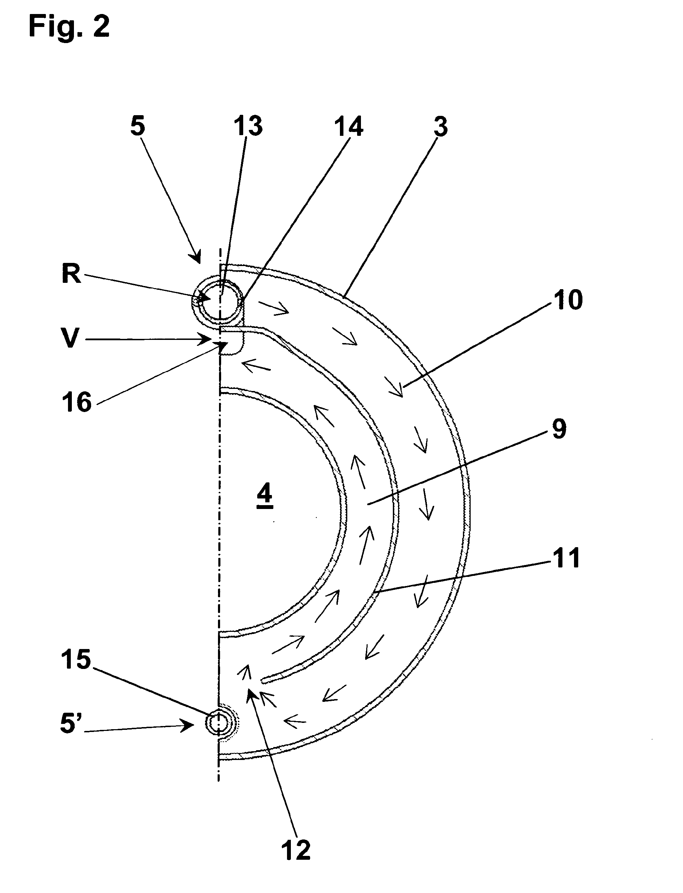

Fig. 2: in einem vertikalen Querschnitt durch eine Hälfte eines Gliedes.

Der Gliederheizkessel besteht im Wesentlichen aus ringförmigen Gliedern, nämlich einem Vorderglied 1, einem deckelförmigen Hinterglied 2 und mehreren Mittelgliedern 3. Diese bilden einen Brennraum 4 und besitzen jeweils ringförmige Wasserräume. Sie stehen miteinander über eine obere und untere Nabe 5, 5' in Verbindung.

Der vom Gliederblock gebildete Wärmetauscher weist als Heizgaszüge jeweils ringförmige Spalte 6 zwischen zwei benachbarten Gliedern 1, 2, 3 mit einer einander zugeordneten Geometrie auf, welche jeweils ausgehend vom Brennraum 4 etwa radial nach außen verlaufen und in einen Abgassammelraum 7 mit einem Abgasstutzen 8 auf der Außenseite der Glieder 1, 2, 3 einmünden.

Die einzelnen Glieder 1, 2, 3 sind jeweils heizwasserseitig in zwei Strömungskanäle 9, 10 aufgeteilt und besitzen dazu jeweils eine Trennwand 11. Es entsteht dadurch ein innerer, brennkammemaher Strömungskanal 9 und einen äußerer, durchmessergrößerer Strömungskanal 10, wobei diese in einem Glied 1, 2, 3 im Bereich der unteren Nabe 5' mit einer Überströmöffnung 12 in der Trennwand 11 hydraulisch miteinander verbunden sind, so dass diese in Reihe durchströmt werden. Dabei teilt sich die Strömung, ausgehend vom oberen Rücklaufanschluss R, zunächst in die beiden Hälften eines Gliedes 1, 2, 3 auf. Das Rücklaufwasser gelangt auf beiden Seiten im jeweils äußeren, durchmessergrößeren Strömungskanal 10 nach unten, strömt an der Überströmöffnung 12 nach innen und steigt dann auf beiden Seiten des Brennraumes 4 im inneren Strömungskanal 9 wieder nach oben zum Vorlaufanschluss V auf.

Im Bereich der oberen Nabe 5 ist der Rücklaufanschluss R oberhalb des Vorlaufanschlusses V angeordnet. Ein Einspeiserohr 13 dient zum Dosieren des eintretenden Rücklaufwassers über jeweils eine seitlich in den äußeren Strömungskanal 10 gerichtete Durchbrechung 14 auf Gliedebene. Das Einspeiserohr 13 dient auch zum Zusammenhalten des Gliederblockes im Bereich der oberen Nabe 5. Dagegen ist in der unteren Nabe 5' eine diese durchgreifende Ankerstange 15 angeordnet, welche auch Verschluss- und/oder Dichtmittel zwischen einzelnen Gliedern 1, 2, 3 fixiert.

Der Vorlaufanschluss V befindet sich im Bereich der oberen Nabe 5 unterhalb des Rücklaufanschlusses R, wobei zwischen den einzelnen Gliedern 1, 2, 3 zueinander fluchtende Durchbrechungen 16 vorgesehen sind, welche als Verbindung zwischen den jeweiligen inneren, brennkammernahen Strömungskanälen 9 dienen.

## Patentansprüche

1. Gliederheizkessel aus Gusseisen oder Aluminium, insbesondere Brennwertkessel, mit im Wesentlichen ringförmigen Gliedern, wobei ein Vorderglied (1), ein deckelförmiges Hinterglied (2) und mindestens ein Mittelglied (3) vorgesehen sind, die einen Brennraum (4) mit einem im Wesentlichen umgebenden Wärmetauscher aus einem Gliederblock bilden, dessen ringförmige Wasserräume miteinander über mindestens eine Nabe (5, 5') in Verbindung stehen und welcher spaltartige Heizgaszüge aufweist, mit einem Rücklaufanschluss (R) und einem Vorlaufanschluss (V) im oberen Bereich
wobei der Wärmetauscher als Heizgaszüge jeweils ringförmige Spalte (6) zwischen zwei benachbarten Gliedern (1, 2, 3) mit einer einander zugeordneten Geometrie aufweist, welche jeweils ausgehend vom Brennraum (4) etwa radial nach außen verlaufen und in einen Abgassammelraum (7) auf der Außenseite der Glieder (1, 2, 3) einmünden, und dass die einzelnen Glieder (1, 2, 3) jeweils heizwasserseitig in mindestens zwei Strömungskanäle (9, 10) aufgeteilt sind, **dadurch gekennzeichnet, dass** jedes Glied (1, 2, 3) heizwasserseitig mindestens eine Trennwand (11) aufweist und dadurch in mindestens einen inneren, brennkammemahen Strömungskanal (9) und mindestens einen äußeren Strömungskanal aufgeteilt ist, und dass der Gliederheizkessel mindestens zwei Ankerstangen zum Zusammenhalten des Gliederblockes enthält.

2. Gliederheizkessel nach Anspruch 1,
**dadurch gekennzeichnet, dass** die mindestens zwei Strömungskanäle (9, 10) in einem Glied (1, 2, 3) im Bereich der unteren Nabe (5') mit einer Überströmöffnung (12) in der Trennwand (11) hydraulisch miteinander verbunden sind, so dass diese in Reihe durchströmt werden, wobei ausgehend vom oberen Rücklaufanschluss (R), zunächst in beiden Hälften eines Gliedes (1, 2, 3) Rücklaufwasser im jeweils äußeren, durchmessergrößeren Strömungskanal (10) nach unten gelangt, an der Überströmöffnung (12) nach innen strömt und dann in beiden Hälften eines Gliedes (1, 2, 3) jeweils im inneren, brennkammernahen Strömungskanal (9) wieder nach oben zum Vorlaufanschluss (V) gelangt.

3. Gliederheizkessel nach einem der Ansprüche 1 bis 2,
**dadurch gekennzeichnet, dass** der innere, brennkammernahe Strömungskanal (9) einen geringeren Querschnitt als der äußere, brennkammerferne Strömungskanal (10) aufweist.

4. Gliederheizkessel nach einem der Ansprüche 1 bis 3,
**dadurch gekennzeichnet, dass** der innere, brennkammernahe Strömungskanal (9) so bemessen ist, dass sich höhere Strömungsgeschwindigkeiten als im äußeren, brennkammerfemen Strömungskanal (10) einstellen.

5. Gliederheizkessel nach Anspruch 1,
**dadurch gekennzeichnet, dass** der Rücklaufanschluss (R) im Bereich der oberen Nabe (5) oberhalb des Vorlaufanschlusses (V) angeordnet ist und dass ein Einspeiserohr (13) für Rücklaufwasser vorgesehen ist, welches jeweils auf Gliedebene mindestens eine Durchbrechung (14) zur Einspeisung von Rücklaufwasser in den äußeren, brennkammerfernen Strömungskanal (10) eines jeden Gliedes (1, 2, 3) besitzt.

6. Gliederheizkessel nach einem der Ansprüche 1 bis 5,
**dadurch gekennzeichnet, dass** zum Zusammenhalten des Gliederblockes ein innerhalb der Naben (5, 5') angeordnetes Einspeiserohr (13) für Rücklaufwasser, ein Entnahmerohr für Vorlaufwasser und/oder eine Ankerstange (15) dient.

7. Gliederheizkessel nach einem der Ansprüche 1 bis 6,
**dadurch gekennzeichnet, dass** der Vorlaufanschluss (V) im Bereich der oberen Nabe (5) unterhalb des Rücklaufanschlusses (R) angeordnet ist, wobei zwischen den einzelnen Gliedern (1, 2, 3) zueinander fluchtende Durchbrechungen (16) vorgesehen sind, welche als Verbindung zwischen den jeweiligen inneren, brennkammemahen Strömungskanälen (9) dienen.

8. Gliederheizkessel nach einem der Ansprüche 1 bis 7,
**dadurch gekennzeichnet, dass** im Bereich der unteren Nabe (5') die einzelnen Glieder (1, 2, 3) zueinander abgedichtet sind, wobei Verschluss- und/oder Dichtmittel an einer innerhalb der Nabe (5') angeordneten Ankerstange (15) angebracht sind.

## Claims

1. Sectional boiler made of cast iron or aluminium, in particular a condensing boiler, having essentially annular sections, wherein there are provided a forward section (1), a cover-shaped rear section (2) and at least one middle section (3) which form a combustion space (4) with an essentially surrounding heat exchanger consisting of a section block, whose annular water spaces are connected to one another via at least one hub (5, 5') and which has gap-like heating gas flues, with a return flow connection (R) and a forward flow connection (V) in the upper region,
wherein the heat exchanger has, as heating gas flues, in each case annular gaps (6) between two adjacent sections (1, 2, 3) with a shape that matches each other, which gaps each run approximately radially outward from the combustion space (4) and open in an exhaust gas manifold (7) on the outer side of the sections (1, 2, 3), and wherein the individual sections (1, 2, 3) are each divided, on the heating water side, into at least two flow ducts (9, 10), **characterized in that** each section (1, 2, 3) has, on the heating water side, at least one partition wall (11) and is thus divided into at least one inner flow duct (9), close to the combustion chamber, and at least one outer flow duct, and **in that** the sectional boiler contains at least two anchor rods for holding the section block together.

2. Sectional boiler according to Claim 1,
**characterized in that** the at least two flow ducts (9, 10) in a section (1, 2, 3) are hydraulically connected to one another in the region of the lower hub (5') via an overflow opening (12) in the partition wall (11), such that these are flowed through in sequence wherein, proceeding from the upper return flow connection (R), first in both halves of a section (1, 2, 3), return-flow water flows downward in the respective outer, larger-diameter flow duct (10), flows inward at the overflow opening (12) and then flows up again toward the forward flow connection (V) in both halves of a section (1, 2, 3), in each case in the inner flow duct (9) which is closer to the combustion chamber.

3. Sectional boiler according to either of Claims 1 and 2,
**characterized in that** the cross section of the inner flow duct (9) which is closer to the combustion chamber is smaller than that of the outer flow duct (10) which is further from the combustion chamber.

4. Sectional boiler according to one of Claims 1 to 3,
**characterized in that** the inner flow duct (9) which is closer to the combustion chamber is dimensioned such that higher flow speeds prevail than in the outer flow duct (10) which is further from the combustion chamber.

5. Sectional boiler according to Claim 1,
**characterized in that** the return flow connection (R) is arranged in the region of the upper hub (5), above the forward flow connection (V), and **in that** there is provided a feed pipe (13) for return-flow water, which feed pipe has, in each case in the plane of the section, at least one aperture (14) for feeding return-flow water into the outer flow duct (10), which is further from the combustion chamber, of a respective section (1, 2, 3).

6. Sectional boiler according to one of Claims 1 to 5,
**characterized in that** an anchor rod (15), an extraction pipe for forward-flow water and/or a feed pipe (13) for return-flow water, arranged within the hubs (5, 5'), serve to hold the section block together.

7. Sectional boiler according to one of Claims 1 to 6,
**characterized in that** the forward flow connection (V) is arranged in the region of the upper hub (5), beneath the return flow connection (R), wherein mutually flush apertures (16) are provided between the individual sections (1, 2, 3), which apertures serve as connection between the respective inner flow ducts (9) which are close to the combustion chamber.

8. Sectional boiler according to one of Claims 1 to 7,
**characterized in that**, in the region of the lower hub (5'), the individual sections (1, 2, 3) are sealed with respect to one another, wherein closure and/or sealing means are applied to an anchor rod (15) arranged within the hub (5').

## Revendications

1. Chaudière sectionnée en fonte ou en aluminium, en particulier chaudière à condensation, comprenant des organes essentiellement annulaires, un organe avant (1), un organe arrière (2) en forme de couvercle et au moins un organe central (3) étant prévus, lesquels forment une chambre de combustion (4) avec un échangeur de chaleur essentiellement périphérique constitué d'un bloc d'organes dont les chambres d'eau annulaires sont en liaison les unes avec les autres par le biais d'au moins un moyeu (5, 5') et qui comprend des conduits de gaz chaud de type interstice, comprenant un raccord de retour (R) et un raccord d'arrivée (V) dans la région supérieure,
l'échangeur de chaleur comprenant, en tant que conduits de gaz chaud, à chaque fois des interstices annulaires (6) entre deux organes adjacents (1, 2, 3) avec des géométries associées les unes aux autres, lesquels interstices s'étendent à chaque fois approximativement radialement vers l'extérieur à partir de la chambre de combustion (4) et débouchent dans une chambre de collecte de gaz d'échappement (7) sur le côté extérieur des organes (1, 2, 3), et les organes individuels (1, 2, 3) étant à chaque fois divisés, du côté de l'eau chaude, en au moins deux canaux d'écoulement (9, 10), **caractérisée en ce que** chaque organe (1, 2, 3) comprend au moins une paroi de séparation (11) du côté de l'eau chaude et est de ce fait divisé en au moins un canal d'écoulement (9) intérieur proche de la chambre de combustion et au moins un canal d'écoulement extérieur, et **en ce que** la chaudière sectionnée comporte au moins deux tiges d'ancrage pour maintenir ensemble le bloc d'organes.

2. Chaudière sectionnée selon la revendication 1,
**caractérisée en ce que** les au moins deux canaux d'écoulement (9, 10) dans un organe (1, 2, 3) sont reliés hydrauliquement les uns aux autres dans la région du moyeu inférieur (5') par une ouverture de décharge (12) dans la paroi de séparation (11), de telle sorte que ceux-ci soient traversés en série, et à partir du raccord de retour supérieur (R), tout d'abord dans les deux moitiés d'un organe (1, 2, 3), de l'eau de retour parvenant vers le bas dans le canal d'écoulement (10) extérieur de plus grand diamètre respectif, s'écoulant vers l'intérieur au niveau de l'ouverture de décharge (12) puis parvenant à nouveau vers le haut jusqu'au raccord d'arrivée (V) dans les deux moitiés d'un organe (1, 2, 3) à chaque fois dans le canal d'écoulement (9) intérieur proche de la chambre de combustion.

3. Chaudière sectionnée selon l'une quelconque des revendications 1 et 2,
**caractérisée en ce que** le canal d'écoulement (9) intérieur proche de la chambre de combustion présente une section transversale plus petite que le canal d'écoulement (10) extérieur éloigné de la chambre de combustion.

4. Chaudière sectionnée selon l'une quelconque des revendications 1 à 3,
**caractérisée en ce que** le canal d'écoulement (9) intérieur proche de la chambre de combustion est dimensionné de telle sorte que des vitesses d'écoulement plus élevées que dans le canal d'écoulement (10) extérieur éloigné de la chambre de combustion se produisent.

5. Chaudière sectionnée selon la revendication 1,
**caractérisée en ce que** le raccord de retour (R) est disposé dans la région du moyeu supérieur (5) au-dessus du raccord d'arrivée (V) et **en ce qu'**un tube d'alimentation (13) pour de l'eau de retour est prévu, lequel présente à chaque fois sur le plan d'organe au moins un orifice (14) pour l'alimentation en eau de retour dans le canal d'écoulement (10) extérieur éloigné de la chambre de combustion d'un organe respectif (1, 2, 3).

6. Chaudière sectionnée selon l'une quelconque des revendications 1 à 5,
**caractérisée en ce qu'**un tube d'alimentation (13) pour de l'eau de retour, disposé à l'intérieur des moyeux (5, 5'), un tube de prélèvement pour de l'eau d'arrivée et/ou une tige d'ancrage (15) servent à maintenir ensemble le bloc d'organes.

7. Chaudière sectionnée selon l'une quelconque des revendications 1 à 6,
**caractérisée en ce que** le raccord d'arrivée (V) est disposé dans la région du moyeu supérieur (5) en dessous du raccord de retour (R), des orifices (16) alignés les uns par rapport aux autres étant prévus entre les organes individuels (1, 2, 3), lesquels orifices servent de liaison entre les canaux d'écoulement (9) intérieurs proches de la chambre de combustion respectifs.

8. Chaudière sectionnée selon l'une quelconque des revendications 1 à 7,
**caractérisée en ce que** les organes individuels (1, 2, 3) sont rendus étanches les uns par rapport aux autres dans la région du moyeu inférieur (5'), des moyens de fermeture et/ou d'étanchéité étant installés sur une tige d'ancrage (15) disposée à l'intérieur du moyeu (5').
